# EUROPÄISCHE PATENTSCHRIFT

(11) **EP 2 940 341 B1**
(45) Veröffentlichungstag und Bekanntmachung des Hinweises auf die Patenterteilung: **20.06.2018**
(21) Anmeldenummer: 14001532.2
(22) Anmeldetag: 30.04.2014
(51) Int. Cl.: F16F 1/02, F16F 3/02

(54) **Leichtbaustruktur**
Lightweight construction structure
Structure de construction légère

(43) Veröffentlichungstag der Anmeldung: 04.11.2015
(73) Patentinhaber: FESTO AG & Co. KG, 73734 Esslingen (DE)
(72) Erfinder: Thallemer, Axel, D-80796 München (DE); Danzer, Martin, D-84069 Schierling (DE); Kaindlsdorfer, Johann, A-4040 Linz (AT); Eder, Bernadette, D-84367 Reut (DE)
(74) Vertreter: Patentanwälte Magenbauer & Kollegen Partnerschaft mbB

(56) Entgegenhaltungen:
- WO-A2-2011/027316
- DE-A1- 10 026 178
- DE-A1- 19 828 648
- DE-U1-202006 002 748
- US-B1- 6 595 503

## Beschreibung

Die Erfindung betrifft eine Leichtbaustruktur.

Leichtbaustrukturen sind bereits seit langem bekannt. Ein wichtiger Grund für den Einsatz von Leichtbaustrukturen ist die Gewichtsreduktion der damit ausgestatteten Bauteile. Leichtbaustrukturen finden beispielsweise Anwendung im Flugzeugbau, in der Automobilindustrie und in der Bauindustrie, insbesondere beim Bau von Gebäuden. Ferner werden Leichtbaustrukturen in medizinischen Anwendungen verwendet.

Leichtbaustrukturen können auf unterschiedliche Arten gebildet werden. Es ist möglich, dass Leichtbaumaterial eingesetzt wird, d.h. die Leichtbaustruktur und die Gewichtsersparnis resultieren in erster Linie aus den Materialeigenschaften.

Ein anderer Ansatz ist, die Leichtbaustruktur dadurch zu bilden, dass herkömmlich verwendetes Material mit Material-Ausmagerungen versehen ist, so dass das durch die Material-Ausmagerungen eingesparte Material eine Gewichtsreduktion ergibt.

Schließlich ist noch ein weiterer Ansatz denkbar, nämlich dass die Leichtbaustruktur aus miteinander zu einem Fachwerk verbundenen Stützstäben ausgebildet ist. Allen Leichtbaustrukturen ist jedoch gemeinsam, dass die Gewichtsreduktion nicht zu Lasten der Stabilität des gesamten Systems gehen darf.
Beim Bau von Gebäuden, Brücken oder dergleichen besteht der Bedarf, die Bauten gegen selbst- und fremderregte Schwingungen zu sichern. Zu den fremderregten Schwingungen gehören beispielsweise durch Erdbeben verursachte Schwingungen, während selbsterregte Schwingungen insbesondere bei Brücken durch Windlast verursacht werden können. Es ist bereits bekannt, zur Schwingungsabsorption sogenannte Schwingungstilger einzusetzen, die auf die zu eliminierende Schwingfrequenz, beispielsweise des Gebäudes oder dergleichen, einstellbar sind und dadurch der Struktur Schwingungsenergie entziehen, die sie für ihre eigenen Schwingbewegungen nutzen. In der Regel sind solche Schwingungstilger als Tilgerpendel ausgebildet.
Derartige Schwingungstilger haben jedoch eine große Masse, ein großes Bauvolumen und sind kostenintensiv in der Anschaffung.

Eine Leichtbaustruktur mit den Merkmalen des Oberbegriffs des Anspruchs 1 ist bereits aus US 6,595,503 B1 bekannt.

Aufgabe der Erfindung ist es daher, eine Leichtbaustruktur bereitzustellen, die gegenüber herkömmlichen Leichtbaustrukturen eine erweiterte Funktionalität besitzt.
Diese Aufgabe wird durch eine Leichtbaustruktur mit den Merkmalen des unabhängigen Anspruchs 1 gelöst. Weiterbildungen der Erfindung sind in den Unteransprüchen dargestellt.
Die erfindungsgemäße Leichtbaustruktur besitzt wenigstens eine Struktureinheit, die einen Obergurt und einen Untergurt aufweist, zwischen denen wenigstens ein schwingungsabsorbierendes Element zur Schwingungsabsorption bzw. Schwingungsdämpfung von auf die Struktureinheit einwirkenden Schwingungen aufgenommen ist.
Es wird also eine Leichtbaustruktur geschaffen, die neben einem geringen Gewicht und hoher Stabilität noch als zusätzliche Eigenschaft schwingungsabsorbierend ausgebildet ist. Mit der Leichtbaustruktur lassen sich selbst- oder fremderregte Schwingungen abbauen, wodurch die damit ausgestatteten Bauteile, beispielsweise Gebäude, weniger schwingungsanfällig sind. Da die Schwingungsabsorption in der Struktur der Leichtbaustruktur stattfindet, können zusätzliche Schwingungstilger, wie aus dem Stand der Technik bekannt, entfallen. Dies kann zu einer Kostenersparnis führen.
Bei einer Weiterbildung der Erfindung sind mehrere Struktureinheiten miteinander zu einem Raumfachwerk verbunden. Die Struktureinheiten lassen sich also beliebig in den drei Raumrichtungen erweitern.
In besonders bevorzugter Weise ist das schwingungsabsorbierende Element reversibel verformbar. Es wäre denkbar, dass das schwingungsabsorbierende Element aus Komponenten aufgebaut ist, die jede für sich keine reversible Verformbarkeit besitzt, jedoch in der Gruppe beim Zusammenwirken der verschiedenen Komponenten eine reversible Verformbarkeit geschaffen wird. Besonders bevorzugt ist es jedoch, wenn das schwingungsabsorbierende Element aus reversibel verformbarem Material besteht. Erfindungsgemäß sind die schwingungsabsorbierenden Elemente untereinander mittels Verbindungsknoten zu einem verästelten Strukturcluster verbunden. Die Verbindung der schwingungsabsorbierenden Elemente untereinander führt zu einer höher Stabilität des Verbundes im Vergleich zu Leichtbaustrukturen, bei denen die schwingungsdämpfenden Elemente untereinander nicht verbunden sind, wenngleich dies auch möglich wäre. Es wäre beispielsweise möglich, dass die schwingungsabsorbierenden Elemente an den Verbindungsknoten aneinander angeformt sind. Eine solche Ausgestaltung könnte beispielsweise mittels generativer Fertigungsverfahren hergestellt werden.
Es ist beispielsweise möglich, dass die Verästelungen wellenartig ausgebildet sind. Es sind jedoch auch andere Ausgestaltungen der Verästelungen möglich.
Bei einer Weiterbildung der Erfindung ist das schwingungsabsorbierende Element in der Abstandsrichtung der beiden Gurte federelastisch nachgiebig ausgebildet.

In einer nicht erfindungsgemäßen Ausbildung ist das schwingungsabsorbierende Element als Einfach-/oder Mehrfachhelix ausgebildet. Es kann beispielsweise eine Doppelhelix als schwingungsabsorbierendes Element verwendet werden. In besonders bevorzugter Weise sind die schwingungsdämpfenden Elemente in Form der Helices dadurch miteinander verästelt bzw. vernetzt, dass an Stellen an denen sich die Schraubenlinien benachbarter Helices berühren oder einander nahekommen, Verbindungsknoten ausgebildet sind. Es ist möglich, dass als schwingungsabsorbierendes Element Schnittkörper der Helices verwendet werden, die durch entlang der Längsachse verlaufende Schnitte gebildet sind. Es ist beispielsweise möglich, als schwingungsabsorbierende Elemente jeweils Helixhälften zu verwenden, die jeweils durch einen Schnitt durch die Mittel-Längsachse einer Doppelhelix entstanden sind. Diese Helixhälften können dann wiederum über Verbindungsknoten mit benachbarten Helixhälften verbunden sein. Erfindungsgemäß ist das schwingungsabsorbierende Element als Möbiusschleife auszubilden. Es können mehrere insbesondere ineinander verschlungene Möbiusschleifen als Struktureinheit eingesetzt werden. Ferner ist es möglich, dass mehrere jeweils in den drei Raumrichtungen nebeneinander liegende Möbiusschleifen vorgesehen sind, wobei insbesondere jeweils in allen drei Raumrichtungen benachbarte Möbiusschleifen an Knotenpunkten miteinander verbunden sind. Die einander benachbarten Möbiusschleifen können aneinander angrenzen bzw. anstoßen oder sich an den Knoten- oder Kreuzungspunkten durchdringen. Es ist möglich, dass jeweils einander benachbarte Möbiusschleifen in zwei der drei Raumrichtung einen Abstand zueinander aufweisen.
In besonders bevorzugter Weise sind die beiden Gurte und das wenigstens eine schwingungsabsorbierende Element als einstückige Struktur ausgebildet. Bei einer Vielzahl flächig verteilter schwingungsabsorbierenden Elementen können diese zusammen mit dem Ober- und Untergurt eine einstückige Struktur bilden. Alternativ wäre es jedoch auch denkbar, dass vor allem im Falle von flächig verteilten schwingungsabsorbierenden Elementen, die miteinander über Verbindungsknoten verästelt sind und dadurch einen Strukturcluster bilden, der Strukturcluster an sich ausgesteift ist und als separate Komponente zwischen dem Ober- und Untergurt aufgenommen ist, wo er dann kraft- und/oder formschlüssig und/oder stoffschlüssig mit Ober- und Untergurt verbunden ist.

Es ist bei einem nicht erfindungsgemäßen Ausführungsbeispiel möglich, dass das schwingungsabsorbierende Element als Festkörperschaum ausgebildet ist. Zweckmäßigerweise besteht der Festkörperschaum aus Schaumstoff. Es kann offenzelliger oder geschlossenzelliger Schaumstoff verwendet werden.

Die Erfindung betrifft ferner noch die Verwendung einer Leichtbaustruktur gemäß einem der Ansprüche 1 bis 7 als Tragwerkstruktur, insbesondere in Gebäuden.
Bevorzugte Ausführungsbeispiele der Erfindung sind in der Zeichnung dargestellt und werden im Folgenden näher erläutert. Die Zeichnungen zeigen:
- Figur 1: einen Schnitt durch ein erstes Ausführungsbeispiel einer nicht erfindungsgemäßen Leichtbaustruktur,
- Figur 2: eine perspektivische Darstellung eines zweiten Ausführungsbeispiels einer nicht erfindungsgemäßen Leichtbaustruktur,
- Figur 3: eine perspektivische Darstellung eines dritten Ausführungsbeispiels einer nicht erfindungsgemäßen Leichtbaustruktur,
- Figur 4: eine perspektivische Darstellung eines vierten Ausführungsbeispiels einer nicht erfindungsgemäßen Leichtbaustruktur,
- Figur 5: eine perspektivische Darstellung eines fünften Ausführungsbeispiels der erfindungsgemäßen Leichtbaustruktur,
- Figur 6: einen Schnitt durch ein sechstes Ausführungsbeispiel der erfindungsgemäßen Leichtbaustruktur,
- Figur 7: eine gegenüber Fig. 6 um 90° gedrehte Ansicht der Leichtbaustruktur von Fig.6,
- Figur 8: einen Schnitt durch ein siebtes Ausführungsbeispiel der erfindungsgemäßen Leichtbaustruktur,
- Figur 9: eine gegenüber Fig. 8 um 90° gedrehte Ansicht der Leichtbaustruktur von Fig.8,
- Figur 10: einen Schnitt durch ein achtes Ausführungsbeispiel der erfindungsgemäßen Leichtbaustruktur,
- Figur 11: eine gegenüber Fig. 10 um 90° gedrehte Ansicht der Leichtbaustruktur von Fig.10,

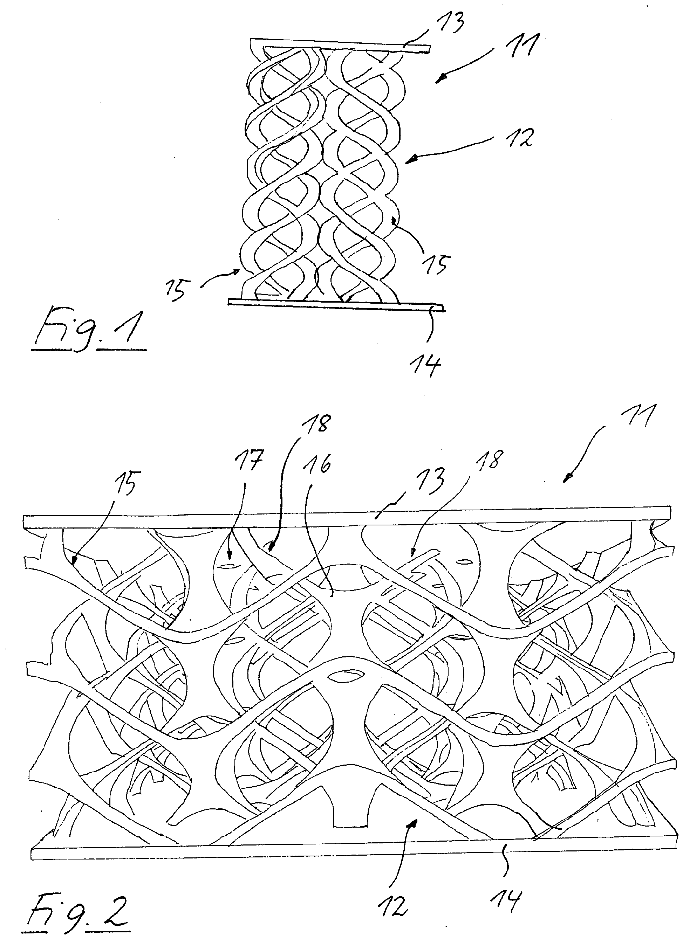

Die Figur 1 zeigt ein erstes Ausführungsbeispiel einer nicht erfindungsgemäßen Leichtbaustruktur 11.
Die Struktureinheit 12 besitzt einen Obergurt 13 und einen in einer Abstandsrichtung mit Abstand zum Obergurt 13 angeordneten Untergurt 14. Ober- und Untergurt 13, 14 sind beispielhaft plattenartig dargestellt, sie können jedoch auch eine beliebig andere Form aufweisen, beispielsweise können Ober- und/oder Untergurt von Freiformflächen begrenzt sein. Auch die Dicke bzw. Stärke des Ober- und Untergurts ist jeweils beliebig wählbar, jedoch versteht es sich von selbst, dass bei einer Leichtbaustruktur Ober- und Untergurte mit relativ geringen Wandstärken eingesetzt sind.
Ein wesentliches Element der erfindungsgemäßen Leichtbaustruktur 11 ist wenigstens ein schwingungsabsorbierendes Element 15, das zwischen Ober- und Untergurt 13, 14 aufgenommen ist und zur Schwingungsabsorption von auf die Struktureinheit 12 einwirkenden Schwingungen ausgebildet ist.
Wie beispielhaft in Figur 1 gezeigt, sind eine Vielzahl von schwingungsabsorbierenden Elementen 15 flächig verteilt zwischen Ober- und Untergurt 13, 14 angeordnet. Das schwingungsabsorbierende Element 15 besteht aus reversibel verformbarem Material.
Wie insbesondere in Figur 1 anhand des ersten Ausführungsbeispiels gezeigt, ist das schwingungsabsorbierende Element 15 als Doppelhelix ausgebildet. Gemäß erstem Ausführungsbeispiel sind also eine Vielzahl von Doppelhelices flächig verteilt zwischen Ober- und Untergurt 13, 14 angeordnet.
Die Doppelhelices können aus dem Material des Ober- und Untergurts 13, 14 herausgeformt sein, d.h. die Doppelhelices und die beiden Gurte 13, 14 bilden eine einstückige Struktur.

Figur 2 zeigt ein zweites Ausführungsbeispiel einer nicht erfindungsgemäßen Leichtbaustruktur 11.
Im Unterschied zum zuvor beschriebenen ersten Ausführungsbeispiel sind die ebenfalls flächig zwischen Ober- und Untergurt 13, 14 verteilt angeordneten schwingungsabsorbierenden Elemente 15 in Form von Helices miteinander vernetzt. Die schwingungsabsorbierenden Elemente 15 sind mittels Verbindungsknoten 16 zu einem verästelten Strukturcluster 17 verbunden. Die schwingungsabsorbierenden Elemente 15 sind wie beim ersten Ausführungsbeispiel als Doppelhelices ausgebildet. Im Gegensatz zum ersten Ausführungsbeispiel sind die Doppelhelices jedoch entlang der Abstandsrichtung der beiden Gurte 13, 14 geschnitten, insbesondere ergeben sich durch die Schnitte Helixhälften 18, die an den Verbindungsknoten 16 mit benachbarten Helixhälften 18 verbunden sind. Durch geeignete Herstellungsverfahren, beispielsweise generative Herstellungsverfahren, insbesondere Rapid Prototyping & Manufacturing, lässt sich die Struktur aus den miteinander verbundenen Helixhälften auch als einstückige Struktur herstellen. Es wäre beispielsweise möglich, die einstückige Struktur durch 3D-Drucken, beispielsweise Lasersintern oder selektives Laserschmelzen oder EBM (Electro Beam Melting), zu fertigen.
Durch die Vernetzung der schwingungsabsorbierenden Elemente 15 ist die Verteilung der auf die Leichtbaustruktur einwirkenden Schwingungen innerhalb des Strukturclusters in allen drei Raumrichtungen möglich, wodurch sich eine verbesserte Schwingungsabsorption erzielen lässt. Zweckmäßigerweise lassen sich bei der Herstellung des Strukturclusters, beispielsweise mit generativen Herstellungsverfahren, die beiden Gurte 13, 14 gleich mitanformen. Die beiden Gurte 13, 14 können plattenartig ausgebildet sein, so dass eine Struktureinheit 12 aus Ober- und Untergurt 14 sowie dem Strukturcluster 17 beispielsweise für Wände oder Böden bzw. Decken von Gebäuden verwendet werden kann. Insbesondere durch ein generatives Herstellungsverfahren lassen sich die beiden Gurte 13, 14 auch als Freiformkörper, die durch Freiformflächen begrenzt sind, herstellen.

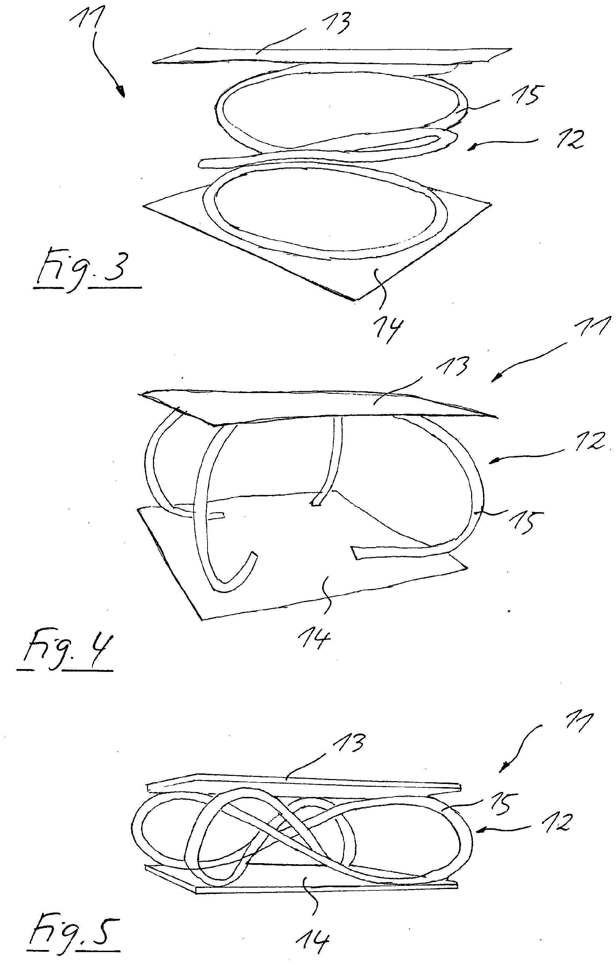

Die Figur 3 zeigt ein drittes Ausführungsbeispiel einer nicht erfindungsgemäßen Leichtbaustruktur 11.
Im Gegensatz zu den zuvor beschriebenen Ausführungsbeispielen ist hier nur ein einzelnes schwingungsabsorbierendes Element 15 in Form einer Wendel mit relativ großem Durchmesser zwischen Ober- und Untergurt 13, 14 aufgenommen. Dadurch, dass lediglich ein einzelnes schwingungsdämpfendes Element 15 vorgesehen ist, ist die dadurch gebildete Struktureinheit 12 weniger steif als die Struktureinheiten der zuvor beschriebenen Ausführungsbeispiele. Insbesondere ist diese Wendel in Abstandsrichtung der beiden Gurte 13, 14 relativ stark federelastisch nachgiebig ausgebildet.

Die Figur 4 zeigt ein viertes Ausführungsbeispiel einer nicht erfindungsgemäßen Leichtbaustruktur 11. Auch hier sind zwischen Ober- und Untergurt 13, 14 mehrere schwingungsdämpfende Elemente 15 vorgesehen. Im Gegensatz zu den zuvor beschriebenen Ausführungsbeispielen bestehen die schwingungsabsorbierenden Elemente 15 jedoch aus in etwa C-förmig profilierten Stäben, die einerseits mit dem Ober- und andererseits mit dem Untergurt 13, 14 verbunden sind.
Figur 5 zeigt ein fünftes Ausführungsbeispiel der erfindungsgemäßen Leichtbaustruktur. Bei diesem Ausführungsbeispiel sind die schwingungsabsorbierenden Elemente 15 als Möbiusschleifen ausgebildet. Es sind hier mehrere ineinander verschlungene Möbiusschleifen vorgesehen, deren Schleifenhälften jeweils einerseits mit dem Ober- und andererseits mit dem Untergurt 13, 14 verbunden sind. Auch hier lassen sich die beiden Gurte 13, 14 und die Möbiusschleifen als einstückige Struktur ausbilden, beispielsweise mittels generativer Herstellungsverfahren herstellen.

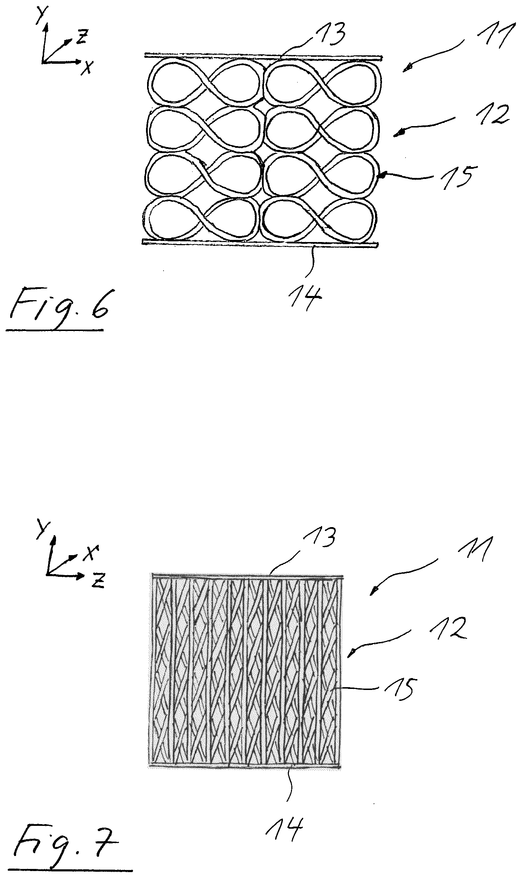

Die Figuren 6 und 7 zeigen ein sechstes Ausführungsbeispiel der erfindungsgemäßen Leichtbaustruktur 11. Auch hier sind die schwingungsabsorbierende Elemente 15 als Möbiusschleifen ausgebildet. Im Gegensatz zum fünften Ausführungsbeispiel bilden hier jedoch eine Vielzahl von zwischen dem Ober- und Untergurt 13, 14 angeordneten Möbiusschleifen die Struktureinheit 12. Wie insbesondere in Figur 6 gezeigt, sind die Möbiusschleifen in X-Richtung eines durch X-, Y- und Z-Koordinaten aufgespannten kartesischen Koordinatensystems in Reihe nebeneinander angeordnet, wobei jeweils einander benachbarten Möbiusschleifen an den Knotenpunkten aneinander anstoßen. Es ist auch möglich, dass jeweils einander benachbarte Möbiusschleifen an den Knotenpunkten einander durchdringen. Auch in der Y-Richtung liegen die Möbiusschleifen in Reihe übereinander. Jeweils in Y-Richtung benachbarte Möbiusschleifen stoßen an den Knotenpunkten aneinander an.

Die Figur 7 zeigt eine um 90° gegenüber der Fig.6 gedrehte Ansicht des Strukturclusters 17. Es ist zu erkennen, dass die Möbiusschleifen in Z-Richtung eine relativ geringe Ausdehnung aufweisen und relativ dicht gepackt in Reihe hintereinander liegen. Auch hier stoßen jeweils in Z-Richtung benachbarte Möbiusschleifen an den Knotenpunkten aneinander an.

Insgesamt ist als jede Möbiusschleife der Struktureinheit 12 sowohl in X- als auch in Y- und in Z-Richtung mit in diesen Richtungen benachbarten Möbiusschleifen verbunden. Durch die Vernetzung ergibt sich eine relativ starke Dämpfungswirkung, da der Dämpfungsgrad neben den Materialeigenschaften der Möbiusschleifen auch durch die Verbindung der Möbiusschleifen untereinander an den Knotenpunkten bestimmt wird. Die Verteilung der auf die Leichtbaustruktur einwirkenden Schwingungen ist in allen drei Raumrichtungen möglich, wodurch sich eine verbesserte Schwingungsabsorption erzielen lässt.

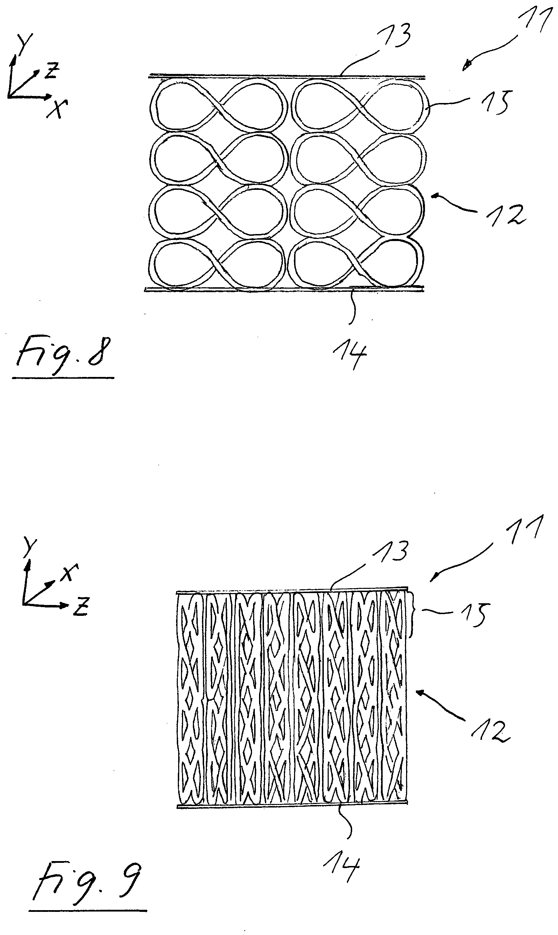

Die Figuren 8 und 9 zeigen ein siebtes Ausführungsbeispiel der erfindungsgemäßen Leichtbaustruktur 11. Dieses Ausführungsbeispiel unterscheidet sich von dem zuvor beschriebenen Ausführungsbeispiel dadurch, dass jeweils einander benachbarte Möbiusschleifen sowohl in X- als auch in Z-Richtung (Figur 9) mit Abstand zueinander angeordnet sind. Dadurch ergeben sich zwischen dem Ober- und Untergurt 13, 14 verlaufende Möbiusschleifen-Säulen. Ingesamt ist eine derartige Struktureinheit 12 schwächer dämpfend, da hier der Dämpfungsgrad im Wesentlichen von den Materialeigenschaften der Möbiusschleifen beeinflusst wird.

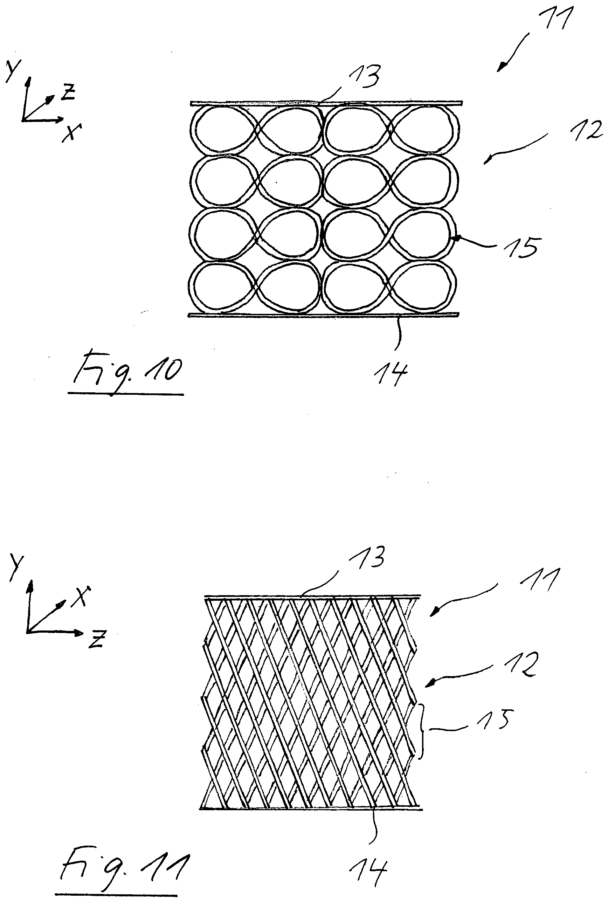

Schließlich zeigen die Figuren 10 und 11 ein achtes Ausführungsbeispiel der erfindungsgemäßen Leichtbaustruktur 11. Bei diesem Ausführungsbeispiel das von der Vernetzung in die drei Raumrichtungen dem in den Figuren 6 und 7 entspricht, sind die Schwingungsdämpfende Elemente 15 anders ausgestaltet. Es sind hier jeweils zwei kreisringförmige Strukturen, die jeweils als Möbiusschleifen ausgebildet sein können, an Knotenpunkten zu einer liegenden Acht zusammengefügt. Die dadurch entstehende Struktur zeichnet sich ferner noch dadurch aus, dass sie in Z-Richtung eine relativ große Ausdehnung aufweist. Dies wird dadurch erreicht, dass die beiden kreisringförmige Strukturen keine gemeinsame Ebene bilden, sondern die eine kreisförmige Struktur in die eine Richtung geneigt und die andere kreisförmige Struktur in die entgegengesetzte Richtung geneigt ist. Insgesamt ist die Struktureinheit im Vergleich zur Struktureinheit des sechsten Ausführungsbeispiels weniger dicht gepackt.

## Patentansprüche

1. Leichtbaustruktur, mit wenigstens einer Struktureinheit (12), die einen Obergurt (13) und einen Untergurt (14) aufweist, zwischen denen wenigstens ein schwingungsabsorbierendes Element (15) zur Schwingungsabsorption von auf die Struktureinheit (12) einwirkenden Schwingungen aufgenommen ist, wobei eine Vielzahl von schwingungsabsorbierenden Elementen (15) flächig verteilt zwischen Ober- und Untergurt (13, 14) angeordnet sind, wobei die schwingungsabsorbierenden Elemente (15) untereinander mittels Verbindungsknoten (16) zu einem verästelten Strukturcluster (17) verbunden sind, **dadurch gekennzeichnet, dass** die schwingungsabsorbierenden Elemente (15) als Möbiusschleifen ausgebildet sind.

2. Leichtbaustruktur nach Anspruch 1, **dadurch gekennzeichnet, dass** mehrere Struktureinheiten (12) miteinander zu einem Raumfachwerk verbunden sind.

3. Leichtbaustruktur nach Anspruch 1 oder 2, **dadurch gekennzeichnet, dass** das schwingungsabsorbierende Element (15) reversibel verformbar ist, insbesondere aus reversibel verformbarem Material besteht.

4. Leichtbaustruktur nach einem der vorhergehenden Ansprüche, **dadurch gekennzeichnet, dass** die Verästelungen wellenartig ausgebildet sind.

5. Leichtbaustruktur nach einem der vorhergehenden Ansprüche, **dadurch gekennzeichnet, dass** das schwingungsabsorbierende Element (15) in der Abstandrichtung der beiden Gurte (13, 14) federelastisch nachgiebig ausgebildet ist.

6. Leichtbaustruktur nach einem der vorhergehenden Ansprüche, **dadurch gekennzeichnet, dass** mehrere jeweils in den drei Raumrichtungen nebeneinander liegende Möbiusschleifen vorgesehen sind, wobei insbesondere jeweils in allen drei Raumrichtungen benachbarte Möbiusschleifen an Knotenpunkten miteinander verbunden sind.

7. Leichtbaustruktur nach einem der vorhergehenden Ansprüche, **dadurch gekennzeichnet, dass** die beiden Gurte (13, 14) und das wenigstens eine schwingungsabsorbierende Element (15) als einstückige Struktur ausgebildet sind.

8. Verwendung einer Leichtbaustruktur nach einem der Ansprüche 1 bis 7 als Tragwerkstruktur insbesondere in Gebäuden.

## Claims

1. Lightweight structure with at least one structural unit (12) which has a top flange (13) and a bottom flange (14), between which is accommodated at least one vibration-absorbing element (15) for vibration absorption of vibrations acting on the structural unit (12), wherein a multiplicity of vibration-absorbing elements (15) are arranged, distributed flatly between top and bottom flange (13, 14), wherein the vibration-absorbing elements (15) are joined together by means of connecting nodes (16) to form a branched structural cluster (17), **characterised in that** the vibration-absorbing elements (15) are in the form of Moebius strips.

2. Lightweight structure according to claim 1, **characterised in that** several structural units (12) are joined together to form a spatial framework.

3. Lightweight structure according to claim 1 or 2, **characterised in that** the vibration-absorbing element (15) is reversibly deformable, in particular being made of reversibly deformable material.

4. Lightweight structure according to any of the preceding claims, **characterised in that** the branchings are wave-like in form.

5. Lightweight structure according to any of the preceding claims, **characterised in that** the vibration-absorbing element (15) is spring-elastically resilient in the spacing direction of the two belts (13, 14).

6. Lightweight structure according to any of the preceding claims, **characterised in that** several Moebius strips, each lying next to one another in the three spatial directions, are provided, wherein in particular in each case Moebius strips adjacent in all three spatial directions are connected to one another at nodal points.

7. Lightweight structure according to any of the preceding claims, **characterised in that** the two belts (13, 14) and the vibration-absorbing element or elements (15) are designed as a one-piece structure.

8. Use of a lightweight structure according to any of claims 1 to 7 as a supporting structure, in particular in buildings.

## Revendications

1. Structure de construction légère, avec au moins une unité structurelle (12), qui présente une sangle supérieure (13) et une sangle inférieure (14), entre lesquelles est logé au moins un élément d'absorption d'oscillations (15) servant à l'absorption d'oscillations agissant sur l'unité structurelle (12), dans laquelle une pluralité d'éléments d'absorption d'oscillations (15) sont disposés de manière répartie en surface entre la sangle supérieure et la sangle inférieure (13, 14), dans laquelle les éléments d'absorption d'oscillations (15) sont reliés les uns aux autres au moyen de noeuds de liaison (16) en une grappe de structures (17) ramifiée, **caractérisée en ce que** les éléments d'absorption d'oscillations (15) sont réalisés sous la forme d'un ruban de Möbius.

2. Structure de construction légère selon la revendication 1, **caractérisée en ce que** plusieurs unités structurelles (12) sont reliées les unes aux autres en une charpente tridimensionnelle.

3. Structure de construction légère selon la revendication 1 ou 2, **caractérisée en ce que** l'élément d'absorption d'oscillations (15) peut être déformé de manière réversible, en particulier est constitué d'un matériau pouvant être déformé de manière réversible.

4. Structure de construction légère selon l'une quelconque des revendications précédentes, **caractérisée en ce que** les ramifications sont réalisées de manière ondulée.

5. Structure de construction légère selon l'une quelconque des revendications précédentes, **caractérisée en ce que** l'élément d'absorption d'oscillations (15) est réalisé de manière souple et élastique à la manière d'un ressort dans le sens d'écartement des deux sangles (13, 14).

6. Structure de construction légère selon l'une quelconque des revendications précédentes, **caractérisée en ce que** plusieurs rubans de Möbius situés les uns à côté des autres respectivement dans les trois directions spatiales sont prévus, dans laquelle en particulier des rubans de Möbius adjacents respectivement dans l'ensemble des trois directions spatiales sont reliés les uns aux autres au niveau de noeuds.

7. Structure de construction légère selon l'une quelconque des revendications précédentes, **caractérisée en ce que** les deux sangles (13, 14) et l'au moins un élément d'absorption d'oscillations (15) sont réalisés sous la forme d'une structure d'un seul tenant.

8. Utilisation d'une structure de construction légère selon l'une quelconque des revendications 1 à 7 en tant que structure d'ossature porteuse en particulier dans des édifices.
